# FASCICULE DE BREVET EUROPEEN

(11) **EP 0 562 895 B1**
(45) Date de publication et mention de la délivrance du brevet: **24.04.1996**
(21) Numéro de dépôt: 93400544.8
(22) Date de dépôt: 03.03.1993
(51) Int. Cl.: F16J 15/16

(54) **Dispositif rechargeable pour le durcissement par la lumière**
Dichtungsvorrichtung zwischen einem druck- und oelbeaufschlagtem Volumen
Sealing device between a pressure and an oil volume

(30) Priorité: 04.03.1992 FR 9202578
(43) Date de publication de la demande: 29.09.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Dusserre-Telmon, Guy Franck Paul, F-77115 Sivry-Courtry (FR); Plona, Daniel Georges, F-77870 Vulaines Sur Seine (FR)

(56) Documents cités:
- EP-A- 0 387 122
- FR-A- 1 112 626
- US-A- 3 600 048
- US-A- 4 406 460
- US-A- 4 426 090

## Description

L'invention concerne un dispositif de joint d'étanchéité disposé entre un volume pressurisé et un volume lubrifié.

De nombreux paliers, notamment des turbomachines de moteurs d'avion, comportent des roulements lubrifiés par un jet ou un brouillard d'huile dont il faut éviter la dissémination dans d'autres parties de l'appareil à travers les jeux nécessités par le passage des arbres tournants hors des paliers. On utilise pour cela divers genres de joints d'étanchéité en combinaison avec une pressurisation des volumes situés de l'autre côté du joint et qu'il convient de protéger. Le gaz pressurisé est prélevé du compresseur du moteur. L'afflux de gaz pénétrant dans le volume lubrifié après avoir contourné le joint renforce donc l'action de celui-ci. Mais le débit de gaz soufflé devient trop faible aux bas régimes du moteur, où la pressurisation est faible, pour être réellement efficace.

L'invention fut donc conçue pour éviter cette limitation et assurer un débit satisfaisant de gaz vers le volume lubrifié en toutes circonstances. Le moyen retenu consiste à conférer une perméabilité variable au joint, c'est-à-dire à le monter avec une souplesse qui lui permet de prendre suivant l'importance de la pressurisation deux positions stables où l'étanchéité qu'il commande est différente.

Le brevet européen 0 387 122 de la demanderesse décrit un dispositif de joint repoussé par un ressort vers une position de butée invariable. Le brevet US-A-4 426 090 décrit un joint mobile pour que du lubrifiant en trop-plein puisse s'échapper vers l'extérieur en le repoussant, ce qui ouvre un conduit. Aucun de ces brevets ne décrit de lubrification par brouillard d'huile ou du même genre associé à un refoulement permanent dans le volume lubrifié par une entrée de gaz à travers le dispositif de joint. Les joints sont montés sans jeu sur l'arbre tournant pour assurer à eux seuls l'étanchéité : ils sont donc soumis à des frottements et une usure plus importante.

Sous sa forme la plus générale, l'invention concerne donc un dispositif de joint d'étanchéité disposé entre un volume pressurisé et un volume lubrifié et autour d'un arbre s'étendant dans les deux volumes et à travers une paroi séparant les deux volumes, un jeu de communication entre les volumes existant entre la paroi et l'arbre, caractérisé en ce que le joint est monté coulissant sur l'arbre entre deux positions de butée, des ressorts étant prévus pour repousser le joint vers le volume pressurisé de sorte que, quand la pressurisation atteint une valeur déterminée qui vainc la force des ressorts, le joint occupe une première des positions de butée, où il obstrue partiellement le jeu, un jeu de communication subsistant entre le joint et soit l'arbre, soit la paroi, et que le joint occupe la seconde des positions de butée quand la pressurisation est inférieure à la valeur déterminée, où il laisse subsister entre les volumes un jeu plus important. Le gaz a donc toujours une charge ou une énergie suffisante pour satisfaire au refoulement, soit par sa pression quand la première position de butée est occupée, soit par sa vitesse et son débit sinon.

La première position de butée peut être définie par une face de butée plane ou conique appartenant soit à la paroi soit à l'arbre, et sur laquelle le joint bute.

Les ressorts s'étendent avant tout entre le joint et la face de butée, mais d'autres peuvent aussi s'étendre entre le joint et un anneau monté sur la paroi ou sur l'arbre et qui définit la seconde position de butée.

Le joint peut consister notamment soit en une bague rigide soit en une bague d'étanchéité montée fixe sur un porte-joint coulissant sur l'arbre ou sur la paroi.

On va maintenant décrire l'invention plus en détail à l'aide des figures suivantes annexées à titre non limitatif et qui représentent certaines réalisations de l'invention :
- les figures 1 et 2 représentent une réalisation de l'invention dans ses deux états de fonctionnement ;
- la figure 3 représente une autre réalisation ;
- la figure 4 représente une troisième réalisation ;
- et la figure 5 représente une quatrième réalisation.

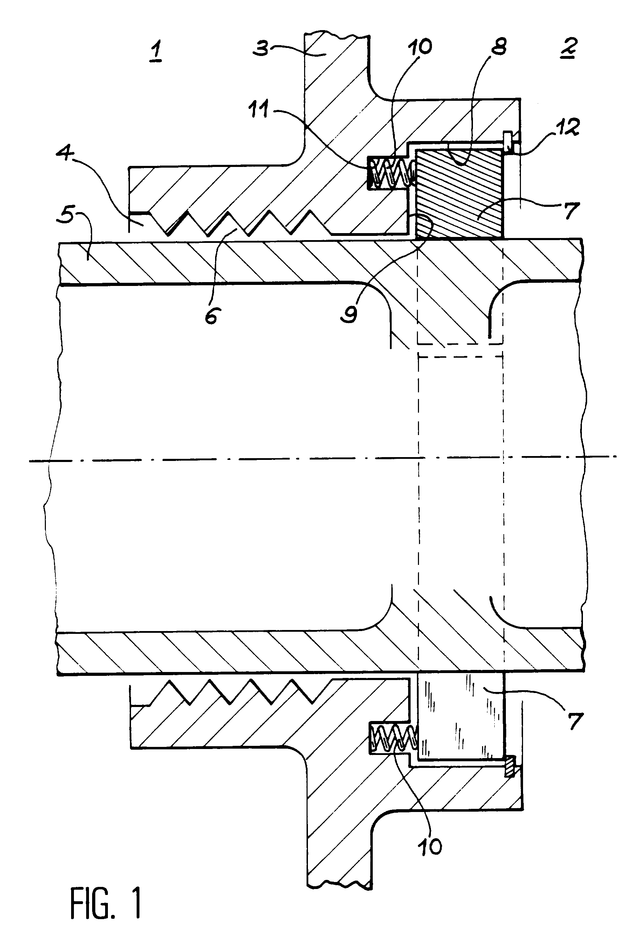

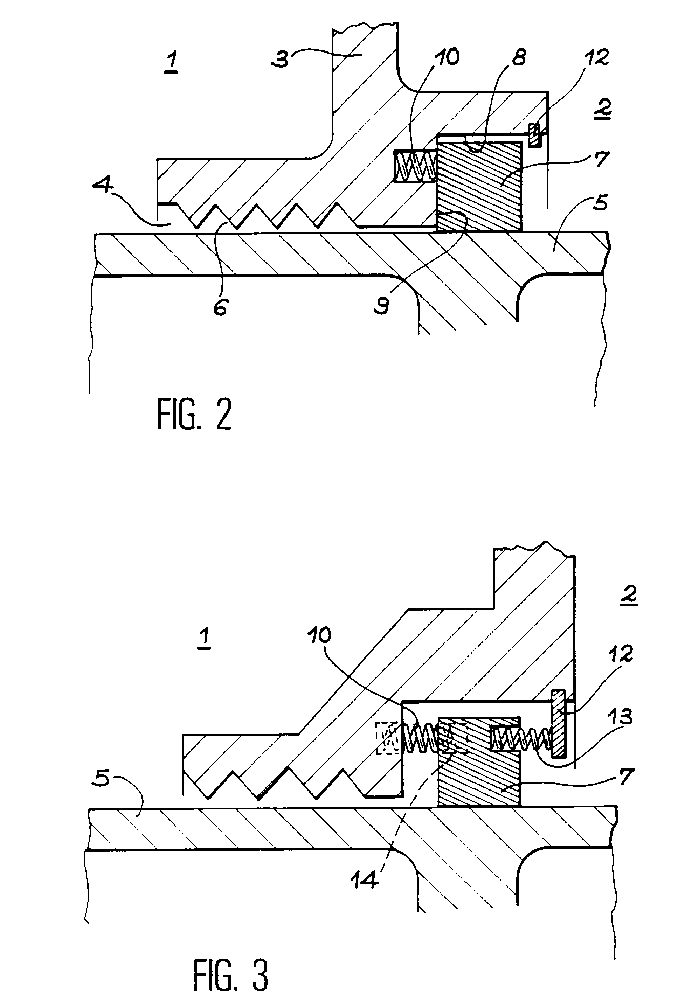

On se reporte aux figures 1 et 2. Le volume lubrifié 1 est séparé du volume pressurisé 2 par une paroi 3 traversée par un passage 4 pour livrer passage à un arbre 5 qui s'étend dans les deux volumes 1 et 2, ce qui impose de rétablir l'étanchéité. On utilise concurremment une vrille déshuileuse 6, établie sur une face circulaire de la paroi 3 autour de l'arbre 5 et qui constitue un joint à labyrinthe ainsi qu'une bague d'étanchéité 7 rigide, à base de carbone, qui frotte contre l'arbre 5 avec un très léger jeu. Un jeu plus important existe entre la bague 7 et une face circulaire 8 de la paroi 3 dans le sens radial, et entre la bague 7 et une face plane 9 dans le sens axial. Un ressort 10 engagé dans un logement 11 percé dans la paroi 3 et débouchant sur la face plane 9 repousse la bague 7 et tend à l'éloigner de la face plane 9 pour la plaquer contre un anneau 12 élastique établi dans une gorge de la face circulaire 8.

Il existe en réalité plusieurs ressorts semblables répartis sur le pourtour de la face plane 9 et l'anneau 12 est muni d'encoches non représentées sur une partie de sa largeur pour maintenir une communication entre le volume pressurisé 2 et le jeu compris entre la bague 7 et la face circulaire 8.

La position représentée sur la figure 1 correspond à une faible pression dans le volume pressurisé 2, aux bas régimes du moteur, qui ne suffit pas pour vaincre la raideur du ressort : la bague 7 bute contre l'anneau 12. On constate qu'un jeu relativement important unit les volumes 1 et 2 entre la paroi 3 d'une part, l'arbre 5 et la bague 7 d'autre part, contre la face circulaire 8 et la face plane 9. L'air du volume pressurisé 2 peut s'écouler avec un débit assez important malgré sa faible pression pour maintenir l'huile à distance de la bague 7. Quand la pression augmente, la bague 7 est déplacée en coulissant axialement sur l'arbre 5, bande le ressort 10 et vient buter contre la face plane 9. L'air sous pression doit alors passer par le petit jeu qui existe entre l'arbre 5 et la bague 7, ce qu'il ne peut faire qu'avec un débit réduit, mais avec une énergie suffisante pour ne pas compromettre l'effet de contention des fuites d'huile. Si la bague 7 est formée de secteurs d'arc, l'air passe aussi par les espaces entre ces secteurs.

La réalisation de la figure 3 diffère de la précédente en ce que d'autres ressorts 13 sont engagés entre la bague 7 et l'anneau 12, en face des précédents 10. L'anneau 12 ou la bague 7 sont alors creusés de logements 14 pour les soutenir. L'avantage de cette réalisation est qu'on dispose de plus de facilités pour choisir la différence de pression qui cause le passage de la bague 7 d'une position de butée à l'autre.

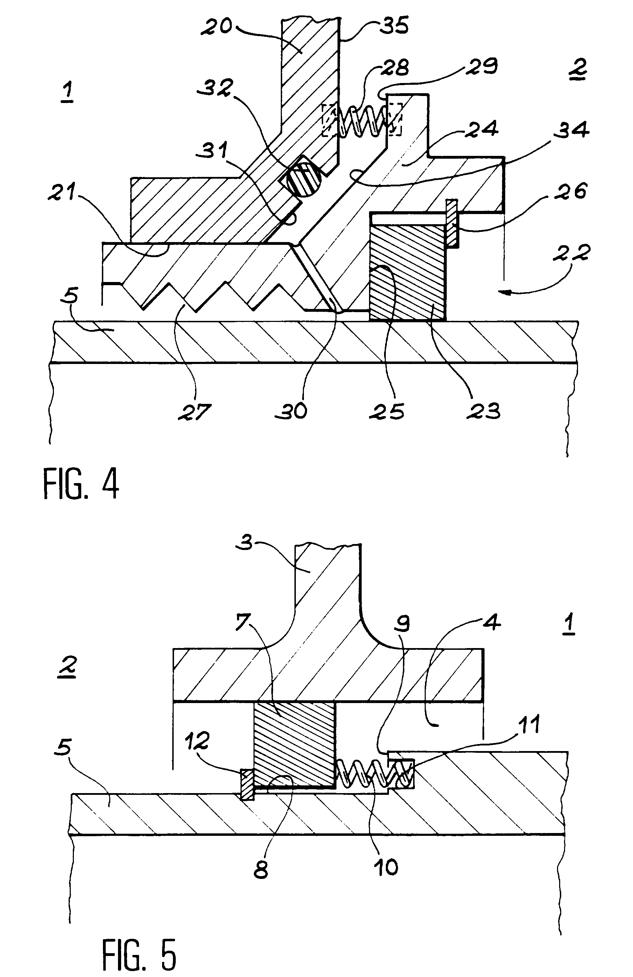

La réalisation de la figure 4 illustre une réalisation un peu différente où la paroi de séparation entre les deux volumes 1 et 2, ici référencée par 20, est munie d'une face circulaire 21 sur laquelle le joint 22 coulisse. Il se compose ici d'une bague 23 constituant le joint proprement dit et qui frotte avec du jeu contre l'arbre 5 et d'un porte-joint 24 sur lequel la bague 23 est montée fixe entre une face plane 25 de celui-ci et un anneau élastique 26. Le porte-joint 24 porte encore une vrille 27 déshuileuse en face de l'arbre 5 et à côté du joint 23.

Des ressorts 28 sont comme précédemment montés entre une face plane 35 de la paroi 20 et le joint 22, mais ils pressent ici sur une couronne 29 plane du porte-joint 24 et pas sur la bague 23. Des logements sont prévus sur la paroi 20 ou la couronne 29 pour recevoir les ressorts 28.

Quand la pression est faible dans le volume pressurisé 2, les ressorts 28 ne sont pas comprimés et un jeu assez important existe entre le porte-joint 24 et la paroi 20, du moins jusqu'à l'endroit où elle se raccorde à la face circulaire 21 de coulissement par une face conique 31 porteuse d'un joint torique 32. Des conduits 30 sont percés à travers le porte-joint 24 entre le jeu mentionné - ils débouchent devant la face conique 31 et la face plane 35 - et celui qui s'étend entre l'arbre 5 et la vrille 27. Un débit d'air suffisamment abondant y passe. Quand la pression est plus forte, les ressorts 28 sont comprimés, le porte-joint 24 déplacé jusqu'à ce que la couronne 29 et la face plane 35 se touchent ou que les faces coniques 31 et 34 se touchent, ce qui rend les conduits 30 inutiles puisque le jeu entre la paroi 20 et le porte-joint 24 disparaît et que le joint torique 32 vient de plus presser contre une face conique 34, parallèle à celle 31 de la paroi 20, du porte-joint 24. L'air passe donc comme précédemment dans le volume lubrifié 1 en passant entre la bague 23 et l'arbre 5.

L'arbre et la paroi ont des fonctions qu'on peut intervertir vis-à-vis du joint ou de la bague : c'est ainsi que l'anneau ou la face plane qui définissent les positions de butée du joint peuvent être établis sur l'arbre comme on le représente à la figure 5, où les références des figures 1 et 2 ont été conservées ; la face circulaire 8 distante de la bague 7 d'un jeu radial important appartient alors à l'arbre 5. Le porte-joint de la figure 4 pourrait aussi coulisser en étant guidé par l'arbre au lieu de l'être par la face circulaire 21, et la vrille déshuileuse pourrait être placée sur l'arbre. La bague 7 coulisse donc sur le passage de la paroi 3 avec un faible jeu.

D'autres aménagements sont encore possibles sans sortir du cadre de l'invention. La vrille déshuileuse, d'ailleurs déjà connue en soi, peut ainsi être omise.

## Revendications

1. Dispositif de joint d'étanchéité (7, 22) disposé entre un volume pressurisé (2) par du gaz et un volume lubrifié (1) et autour d'un arbre (5) s'étendant dans les deux volumes et à travers une paroi (3, 20) séparant les deux volumes, un jeu de communication entre les volumes existant entre la paroi et l'arbre, caractérisé en ce que le joint est monté coulissant sur l'arbre entre deux positions de butée, des ressorts (10, 13, 28) étant prévus pour repousser le joint vers le volume pressurisé de sorte que, quand la pressurisation atteint une valeur déterminée, le joint occupe une des positions de butée, où il obstrue partiellement le jeu, un jeu de communication entre les volumes subsistant entre le joint et soit l'arbre, soit la paroi, et que le joint occupe la seconde des positions de butée quand la pressurisation est inférieure à la valeur déterminée, où il laisse subsister entre les volumes un jeu plus important.

2. Dispositif de joint d'étanchéité selon la revendication 1, caractérisé en ce que la première position de butée est définie par une face de butée plane (9, 35) ou conique (31), appartenant soit à la paroi (3, 20) soit à l'arbre (5) et sur laquelle le joint bute.

3. Dispositif de joint d'étanchéité selon la revendication 2, caractérisé en ce que les ressorts s'étendent entre le joint et la face de butée.

4. Dispositif de joint d'étanchéité selon l'une quelconque des revendications 1 à 3, caractérisé en ce que la seconde position de butée est définie par un anneau (12, 26) monté sur la paroi ou sur l'arbre.

5. Dispositif de joint d'étanchéité selon la revendication 4, caractérisé en ce que certains des ressorts (13) s'étendent entre le joint (7) et l'anneau (12).

6. Dispositif de joint d'étanchéité selon l'une quelconque des revendications 1 à 5, caractérisé en ce que le joint consiste en une bague rigide (7).

7. Dispositif de joint d'étanchéité selon l'une quelconque des revendications 1 à 5, caractérisé en ce que le joint se compose d'une bague d'étanchéité (23) montée fixe sur un porte-joint (24) coulissant sur l'arbre ou la paroi.

8. Dispositif de joint d'étanchéité selon les revendications 2 et 7, caractérisé en ce que le porte-joint (24) comporte des conduits (30) qui le traversent et qui débouchent par une extrémité devant la face de butée.

9. Dispositif de joint d'étanchéité selon l'une quelconque des revendications 1 à 8, caractérisé par une vrille déshuileuse (6, 27) sur la paroi, l'arbre ou le porte-joint.

## Patentansprüche

1. Dichtungsvorrichtung (7,22), angeordnet zwischen einem gasdruckbeaufschlagten Volumen (2) und einem Gleitmittelvolumen (1) und um eine Welle (5) herum, die sich in den zwei Volumen und durch eine Wandung (3,20) hindurch erstreckt, die die zwei Volumen trennt, wobei ein Verbindungsspalt zwischen den Volumen zwischen der Wandung und der Welle vorhanden ist,
dadurch **gekennzeichnet**,
daß die Dichtung zwischen zwei Anschlagspositionen gleitend auf der Welle geführt ist, wobei Federn (10,13,28) vorgesehen sind, um die Dichtung in Richtung des druckbeaufschlagten Volumens dergestalt zu drücken, daß, wenn die Druckbeaufschlagung einen bestimmten Wert erreicht, die Dichtung eine der Anschlagspositionen einnimmt, in der sie den Spalt teilweise verschließt, wobei ein Verbindungsspalt zwischen den Volumen zwischen der Dichtung und entweder der Welle oder der Wandung fortbesteht, und daß die Dichtung, wenn die Druckbeaufschlagung geringer ist als der bestimmte Wert, die zweite Anschlagsposition einnimmt, in der ein größerer Spalt zwischen den Volumen vorhanden ist.

2. Dichtungsvorrichtung gemäß Anspruch 1,
dadurch **gekennzeichnet**,
daß die erste Anschlagsposition durch eine ebene (9,35) oder konische (31) Anschlagsfläche festgelegt ist, die entweder ein Teil der Wandung (3,20) oder der Welle (5) ist, und an der die Dichtung anliegt.

3. Dichtungsvorrichtung gemäß Anspruch 2,
dadurch **gekennzeichnet**,
daß sich die Federn zwischen der Dichtung und der Anschlagsfläche erstrecken.

4. Dichtungsvorrichtung gemäß einem der Ansprüche 1 bis 3,
dadurch **gekennzeichnet**,
daß die zweite Anschlagsposition durch einen Ring (12,26) festgelegt ist, der an der Wandung oder an der Welle angebracht ist.

5. Dichtungsvorrichtung gemäß Anspruch 4,
dadurch **gekennzeichnet**,
daß sich einige der Federn (13) zwischen der Dichtung (7) und dem Ring (12) erstrecken.

6. Dichtungsvorrichtung gemäß einem der Ansprüche 1 bis 5,
dadurch **gekennzeichnet**,
daß die Dichtung aus einem steifen Ring (7) besteht.

7. Dichtungsvorrichtung gemäß einem der Ansprüche 1 bis 5,
dadurch **gekennzeichnet**,
daß die Dichtung aus einem Dichtungsring (23) besteht, der an einem Dichtungshalter (24), der gleitend an der Welle oder der Wandung geführt ist, befestigt ist.

8. Dichtungsvorrichtung gemäß den Ansprüche 2 und 7,
dadurch **gekennzeichnet**,
daß der Dichtungshalter (24) Leitungen (30) aufweist, die ihn durchqueren und mit einem Ende in die Anschlagsfläche münden.

9. Dichtungsvorrichtung gemäß einem der Ansprüche 1 bis 8,
**gekennzeichnet** durch eine Ölscheidungsbohrung (6,27) in der Wandung, der Welle oder dem Dichtungshalter.

## Claims

1. A sealing device (7, 22) disposed between a gas-pressurised volume (2) and a lubricated volume (1) and around a shaft (5) extending into both volumes through a wall (3, 20) separating the two volumes, a clearance for communication between the two volumes existing between the wall and the shaft, characterised in that the seal is mounted on the shaft for sliding between two limit positions, springs (10, 13, 28) being provided to urge the seal towards the pressurised volume so that when the pressurisation reaches a predetermined value the seal takes up a first limit position, in which it partly blocks the clearance, a clearance for communication between the two volumes remaining between the seal and either the shaft or the wall, and the seal takes up its second limit position when the pressurisation is below the predetermined value, in which position it leaves a larger clearance for communication between the two volumes.

2. A sealing device according to claim 1, characterised in that the first limit position is defined by a plane abutment surface (9, 35) or a conical abutment surface (31) which belongs either to the wall (3, 20) or to the shaft (5) and which the seal abuts.

3. A sealing device according to claim 2, characterised in that the springs extend between the seal and the abutment surface.

4. A sealing device according to any of claims 1 to 3, characterised in that the second limit position is defined by a ring (12, 26) disposed on the wall or the shaft.

5. A sealing device according to claim 4, characterised in that some of the springs (13) extend between the seal (7) and the ring (12).

6. A sealing device according to any of claims 1 to 5, characterised in that the seal consists of a rigid band (7).

7. A sealing device according to any of claims 1 to 5, characterised in that the seal consists of a sealing band (23) fixedly mounted on a seal carrier (24) slidable on the shaft or the wall.

8. A sealing device according to claims 2 and 7, characterised in that the seal carrier (24) comprises ducts (30) which extend through it and which open at one end in front of the abutment surface.

9. A sealing device according to any of claims 1 to 8, characterised by a labyrinth oil trap (6, 27) on the wall or the shaft or the seal carrier.
